# FASCICULE DE BREVET EUROPEEN

(11) **EP 3 236 745 B1**
(45) Date de publication et mention de la délivrance du brevet: **27.05.2020**
(21) Numéro de dépôt: 15823680.2
(22) Date de dépôt: 18.12.2015
(51) Int. Cl.: A01K 61/70

(54) **HABITAT AQUATIQUE ARTIFICIEL, SYSTEME D'HABITAT AQUATIQUE, ET PROCEDE DE FABRICATION**
KÜNSTLICHER AQUATISCHER LEBENSRAUM, AQUATISCHES LEBENSRAUMSYSTEM UND HERSTELLUNGSVERFAHREN
ARTIFICIAL AQUATIC HABITAT, AQUATIC HABITATS SYSTEM, AND PRODUCTION METHOD

(30) Priorité: 22.12.2014 FR 1463122
(43) Date de publication de la demande: 01.11.2017
(73) Titulaire: Egis Eau, 34000 Montpellier (FR)
(72) Inventeur: PERROT, Martin, 34070 Montpellier (FR); MONIER, Thierry, 34110 Vic La Gardiole (FR)
(74) Mandataire: Derambure Conseil
(86) Numéro de dépôt international: PCT/FR2015/053636
(87) Numéro de publication internationale: WO 2016/102850

(56) Documents cités:
- FR-A1- 2 721 796
- JP-A- 2003 102 319
- US-A- 4 334 499
- US-A- 4 441 453

## Description

L'invention concerne le domaine des habitats aquatiques artificiels.

Sous l'eau, par exemple dans les fonds maritimes ou en eau douce, certaines espèces animales profitent d'abris naturels tels que des enrochements, des algues, des herbiers, etc., pour échapper à leurs prédateurs. Ces abris naturels développent un assemblage de micro-habitats complexes qui protège les stades de vie les plus précoces contre la prédation et leur permet de se développer. En effet, les prédateurs, souvent plus volumineux, ne peuvent pas facilement se déplacer dans ces espaces trop petits pour eux.

Lorsqu'on réalise des ports, ou d'autres infrastructures maritimes, de manière artificielle, on modifie le relief naturel afin d'aménager l'espace pour les activités maritimes prévues à cet endroit. Ces réalisations ont un impact souvent néfaste sur l'écosystème, entrainant la dégradation voir la destruction des zones de nurseries naturelles des petits fonds côtiers. Pour compenser ces effets néfastes, on peut tenter de simuler la nature avec des ouvrages artificiels, qui respectent toutefois la fonction de l'infrastructure maritime.

En particulier, il a été proposé des habitats aquatiques artificiels spécialement adaptés pour développer la densité de micro-habitats au sein des infrastructures maritimes dans l'objectif de recréer des fonctionnalités écologiques altérées ou perdues telles que l'accueil et la protection des stades juvéniles.

Un exemple d'un tel habitat aquatique artificiel est par exemple décrit dans US 4,441,453. Dans ce document, l'habitat aquatique artificiel offre des joncs s'étendant quasi-verticalement depuis une base. La mise en œuvre de ce dispositif artificiel offre un volume de protection pour les espèces animales assez restreint, les espèces étant peu protégées entre deux dispositifs adjacents disposés d'une distance trop importante. Il faut installer de nombreux dispositifs pour offrir un effet réellement efficace.

En variante, US 8,020,515 offre des joncs qui ne sont pas disposés parallèles entre eux, mais plutôt en étoile, ce qui permet d'augmenter le volume protégé. Toutefois, en conséquence, un tel habitat aquatique est très volumineux, de sorte que les problématiques liées au transport de l'habitat aquatique depuis sa zone de fabrication sur site rendent impossibles son utilisation à grande échelle.

Il existe par conséquent le besoin d'un habitat aquatique artificiel biomimétique qui soit implémentable en pratique.
Le document FR 2 721 796 A1 décrit un habitat aquatique artificiel suivant le préambule de la revendication indépendante 1.

Ci-après, un exposé de l'invention.

Selon un premier aspect, l'invention a pour objet un habitat aquatique artificiel, conformément à la revendication indépendante 1, comprenant une base, une pluralité de blocs faisceau et un élément d'ancrage adapté pour relier la base à une structure externe.

La base est formée d'au moins un élément de base, ledit au moins un élément de base comprenant au moins une portion d'assemblage.

Chaque bloc faisceau de la pluralité de blocs faisceau comprend un pied duquel s'étendent une pluralité de joncs et une portion d'assemblage adaptée pour coopérer avec une portion d'assemblage de la base pour assembler ensemble un bloc faisceau à un élément de base.

Les joncs s'étendent du pied à l'intérieur d'une enveloppe géométrique conique s'élargissant.

Grâce à ces dispositions, on obtient un habitat aquatique artificiel susceptible de présenter un grand volume de micro-habitats, et composé de composants de faible encombrement, ce qui permet une mise en œuvre vraiment pratique.

En outre, l'habitat aquatique artificiel permet de de réaliser des infrastructures maritimes éco-conçus et mieux intégrées au sein des écosystèmes marins tout en respectant la fonction technique de l'installation.

Selon l'invention, la base est formée d'une pluralité d'éléments de base assemblés ensemble. Chaque élément de base comprend en outre au moins une portion de liaison adaptée pour coopérer avec une portion de liaison d'un autre élément de base pour assembler ensemble plusieurs éléments de base.

Selon une réalisation, les éléments de base présentent des géométries empilables.

Selon une réalisation, la base comprend une coque creuse. Chacun des au moins un élément de base peut comprendre un élément de coque présentant une géométrie de portion de sphère.

Selon une réalisation, la portion de liaison de chaque élément de base est disposée sur une tranche de l'élément de coque.

Selon une réalisation, la portion de liaison est hermaphrodite.

Selon une réalisation, au moins deux, et notamment tous les éléments de base sont identiques.

Selon une réalisation, chacun des au moins un élément de base présente au moins une ouverture traversante.

Selon une réalisation, chacun des au moins un élément de base comprend un évidement constituant la portion d'assemblage de l'élément de base. Les portions d'assemblage peuvent coopérer ensemble de manière amovible, notamment par vissage.

Selon une réalisation, les portions de liaison coopèrent ensemble par emboîtement par complémentarité de forme.

Selon une réalisation, les portions de liaison coopèrent ensemble de manière amovible, notamment par boulonnage.

Selon une réalisation, les enveloppes géométriques coniques des blocs faisceau ne s'intersectent pas.

Selon une réalisation, chaque enveloppe géométrique conique présente un angle de conicité inférieur à 20°.

Selon une réalisation, chaque bloc faisceau comprend entre 2 et 10 joncs.

Selon une réalisation, chaque élément de base est assemblé à entre 2 et 30 blocs faisceau.

Selon une réalisation, la base est constituée de deux éléments de base.

Selon une réalisation, deux blocs faisceaux, notamment deux blocs faisceau assemblés à un même élément de base, notamment tous les blocs faisceau assemblés à un même élément de base, et notamment tous les blocs faisceaux sont identiques.

Selon un deuxième aspect, l'invention a également pour objet un habitat aquatique artificiel en kit conformément à la revendication indépendante 11 et comprenant séparément les éléments nécessaires à la réalisation d'un habitat aquatique artificiel tel que défini ci-dessus.

Selon un troisième aspect, l'invention a également pour objet un système d'habitats aquatiques conformément à la revendication indépendante 12 et comprenant une pluralité d'habitats aquatiques artificiels chacun tel que défini ci-dessus, et agencés de manière ordonnée.

Selon une réalisation, le système d'habitats aquatiques comprend au moins deux, et notamment tous les habitats aquatiques artificiels identiques.

Selon un quatrième aspect, l'invention a également pour objet un procédé de fabrication d'un habitat aquatique artificiel conformément à la revendication indépendante 13 et comprenant les étapes suivantes :
- on fournit une base formée d'au moins un élément de base, ledit au moins un élément de base comprenant au moins une portion d'assemblage, ladite base comprenant en outre une coque creuse, chacun des au moins un élément de base comprenant un élément de coque présentant une géométrie de portion de sphère,
- on fournit une pluralité de blocs faisceau, chaque bloc faisceau comprenant un pied duquel s'étendent une pluralité de joncs, les joncs s'étendant du pied à l'intérieur d'une enveloppe géométrique conique s'élargissant, chaque bloc faisceau comprenant en outre une portion d'assemblage adaptée pour coopérer avec une portion d'assemblage de la base pour assembler ensemble un bloc faisceau à un élément de base,
- on assemble les blocs faisceau à l'au moins un élément de base,
- on relie la base à une structure externe par un élément d'ancrage.

Selon une réalisation, on assemble ensemble une pluralité d'éléments de base pour former la base, chaque élément de base comprenant en outre au moins une portion de liaison adaptée pour coopérer avec une portion de liaison d'un autre élément de base pour assembler ensemble plusieurs éléments de base.

Selon une réalisation, on assemble les blocs faisceau aux éléments de base avant d'assembler ensemble des, et notamment les, éléments de base.

Selon une réalisation, on assemble les blocs faisceau aux éléments de base après avoir assemblé ensemble des, et notamment les, éléments de base.

Selon un cinquième aspect, l'invention a également pour objet un procédé de fabrication d'un système d'habitats aquatiques conformément à la revendication indépendante 15, dans lequel on forme une pluralité d'habitats aquatiques en mettant en œuvre à chaque fois le procédé de fabrication d'un habitat aquatique artificiel tel que défini ci-dessus. On dispose dans l'eau les habitats aquatiques ainsi formés de manière ordonnée.

On décrit maintenant brièvement les figures des dessins.
La figure 1 est une vue de face d'un habitat aquatique artificiel selon un premier exemple de réalisation de l'invention.

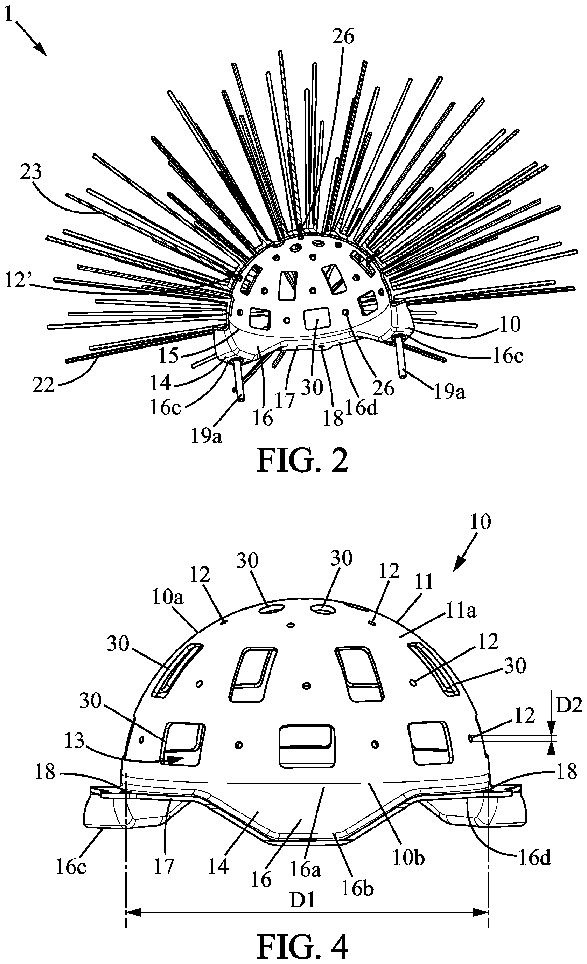

La figure 2 est une vue en coupe transversale de l'habitat aquatique de la figure 1.

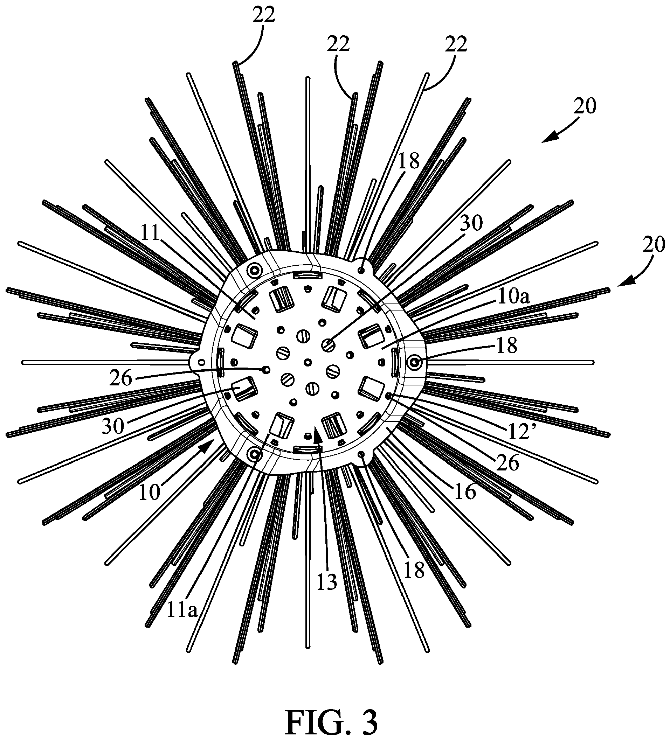

La figure 3 est une vue de dessous de l'habitat aquatique de la figure 1.
La figure 4 est une vue de face d'un élément de base de l'habitat aquatique selon l'invention.
La figure 5 est une vue de dessus de l'élément de base de la figure 3.
La figure 6 est une vue en perspective d'un bloc faisceau de l'habitat aquatique selon l'invention.
Les figures 7A et 7B sont respectivement des vues de dessous et de dessus du bloc faisceau de la figure 5.
La figure 8 est une vue de face d'un habitat aquatique artificiel selon un deuxième exemple de réalisation de l'invention.

Ci-après un exposé détaillé de plusieurs modes de réalisation de l'invention assorti d'exemples et de référence aux dessins. Par souci de clarté, seuls les éléments utiles à la compréhension des exemples de réalisation décrits ont été représentés et seront détaillés.

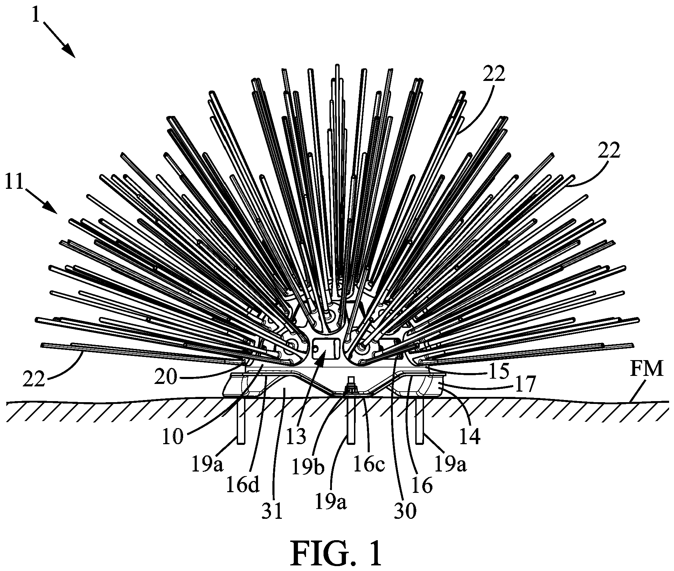

La figure 1 représente un habitat aquatique **1** artificiel. L'habitat aquatique 1 développe un panel de micro-habitats adapté pour servir d'abris et de support à une faune et une flore marine variée. Par exemple, les micro-habitats créés peuvent permettre aux stades de vie juvénile de poissons, de crustacés et de céphalopodes de s'y refugier. L'habitat aquatique 1 permet ainsi de protéger les individus contre des prédateurs.

L'habitat aquatique 1 possède en outre un rôle de support et d'alimentation. L'habitat aquatique 1 permet l'installation de biofilms, d'invertébrés, d'algues et de différentes autres espèces fixées.

Ces différentes espèces fixées constituent les premiers maillons de la chaine alimentaire. En permettant leur installation pérenne, l'habitat aquatique 1 développe ainsi une fonctionnalité d'alimentation (garde-manger) pour de nombreuses espèces notamment au stade juvénile.

L'habitat aquatique 1 comprend une base **10** et une pluralité de blocs faisceau **20.**

La base 10 est adaptée pour recevoir les blocs faisceau 20. La base 10 est en outre adaptée pour servir d'abris à la faune marine.

La base 10 comprend une coque **10a** comprenant une face intérieure et une face extérieure opposée. La face intérieure définit un volume intérieur **13.** La face extérieure présente une forme adaptée pour une configuration sensiblement homogène dans l'espace des faisceaux. La face extérieure présente une forme générale arrondie. La coque 10a est par exemple réalisée par thermo-formage.

Dans un premier exemple de réalisation, représenté sur la figure 1, la coque 10a de la base 10 est hémisphéroïdale. Alternativement, mais non conformément à l'invention, la coque 10a peut être conique, hémi-ovale, cylindrique, etc. L'habitat aquatique 1 peut être immergé. La base 10 peut comprendre en outre une face inférieure **10b** ouverte sur laquelle ledit habitat aquatique 1 repose sur un fond marin **FM.** La face inférieure 10b délimite le volume intérieur 13. La face inférieure 10b peut être circulaire et présente un premier diamètre **D1.** Le premier diamètre D1 est, par exemple, compris entre 250 et 350 millimètres. En outre, la base 10 comprend un élément d'ancrage fixant ladite base 10 à une structure externe. La structure externe peut être artificielle ou naturelle, telle que le fond marin FM. L'élément d'ancrage est par exemple solidaire de la face inférieure 10b. La coque 10a est creuse. Le volume intérieur 13 forme ainsi une cavité dont le sol est constitué par le fond marin FM. Un tel habitat aquatique 1 imite ainsi parfaitement les micro-habitats retrouvés au niveau de zones de nurseries naturelles (e.g. herbiers de Posidonies, champs de macroalgues, récifs coralliens etc.) dans lesquels la grande majorité des poissons littoraux se réfugient. La face inférieure 10b, ou le sol, dudit habitat aquatique 1 observe par ailleurs des conditions hydrodynamiques faibles adaptées à leur présence.

Le volume intérieur 13 peut être totalement ou partiellement rempli de matériaux afin de lester l'habitat aquatique 1. Les matériaux contenus dans le volume intérieur 13 peuvent être agencés pour fragmenter ledit volume intérieur 13 afin d'aménager une pluralité de micro-habitats favorisant la colonisation de l'habitat aquatique 1. Les matériaux contenus dans le volume intérieur 13 peuvent en outre être adaptés pour l'apport de substrat afin de favoriser la colonisation de l'habitat aquatique 1 par les espèces cibles (notamment des espèces cryptiques). Ces matériaux sont, par exemple, des granulats naturels ou artificiels, des débris coquilliers, etc..

La base 10 peut être constituée d'un unique élément de base **11.** L'élément de base 11 est réalisé dans une matière présentant une densité inférieure à 1, permettant à la base 10 de flotter entre deux eaux, portée par le courant marin. En outre, l'élément de base 11 est réalisé dans une matière résistante dans l'eau de mer. L'élément de base 11 peut être réalisée en polypropylène ou alternativement en plastique biosourcé, ou plus généralement en toute matière plastique moulable inerte et résistante dans l'eau de mer.

L'élément de base 11 comprend un élément de coque **11a.** L'élément de coque 11a présente une géométrie de portion de sphère, par exemple de demi-sphère.

L'élément de base 11 comprend en outre au moins une portion d'assemblage **12.** Chaque portion d'assemblage 12 de l'élément de base 11 est adaptée pour coopérer avec une portion d'assemblage 12' d'un bloc faisceau 20 afin d'assembler ledit bloc faisceau 20 audit élément de base 11. L'élément de base 11 comprend, par exemple, entre deux et trente portions d'assemblage 12. Les portions d'assemblage 12 peuvent être uniformément réparties sur l'élément de base 11. Alternativement, les portions d'assemblage 12 peuvent être réparties aléatoirement sur l'élément de base 11 sans toutefois impacter négativement la rigidité d'ensemble. Plus particulièrement, l'élément de coque 11a comprend au moins une portion d'assemblage 12.

La portion d'assemblage 12 est, par exemple, un évidement. L'évidement peut être circulaire et présente un deuxième diamètre **D2.** Le deuxième diamètre D2 est, par exemple, compris entre 5 et 6 millimètres.

L'élément de base 11 peut comprendre en outre une ouverture traversante **30.** Plus particulièrement, l'élément de coque 11a peut comprendre l'ouverture traversante 30. L'ouverture traversante 30 est adaptée pour permettre à la faune marine d'entrer dans le volume intérieur 13 et d'en sortir.

Alternativement, l'élément de base 11 peut comprendre une pluralité d'ouvertures traversantes 30. Plus particulièrement, l'élément de coque 11a peut comprendre la pluralité d'ouvertures traversantes 30.

Les ouvertures traversantes 30 peuvent être uniformément réparties sur l'élément de coque 11a. Alternativement, les ouvertures traversantes 30 peuvent être réparties aléatoirement sur l'élément de coque 11a sans toutefois impacter négativement la rigidité d'ensemble.

Chaque ouverture traversante 30 présente, par exemple, une forme sensiblement circulaire. Alternativement, chaque ouverture traversante 30 présente une forme sensiblement rectangulaire. Alternativement, une première partie de la pluralité d'ouvertures traversantes 30 présente une première forme géométrique, par exemple circulaire, et une deuxième partie de la pluralité d'ouvertures traversantes 30 présente une deuxième forme géométrique différente de la première forme géométrique, par exemple rectangulaire.

La pluralité d'ouvertures traversantes 30 peut présenter une taille unique. Alternativement, au moins deux ouvertures traversantes 30 de la pluralité d'ouvertures traversantes 30 peuvent présenter des tailles différentes l'une de l'autre. La taille de la pluralité d'ouvertures traversantes 30 est adaptée pour permettre à la faune marine d'entrer dans le volume intérieur 13 tout en empêchant leurs prédateurs, généralement plus imposants, de les suivre. La ou les tailles de la pluralité d'ouvertures traversantes 30 sont déterminées en fonction des stades de vies et des espèces de la faune marine à qui est destiné l'habitat aquatique 1.

L'élément de base 11 peut en outre comprendre une portion de liaison **14.** La portion de liaison 14 est adaptée pour servir d'élément d'ancrage au fond marin FM.

La portion de liaison 14 s'étend à partir d'une tranche **15** de l'élément de coque 11a. La portion de liaison 14 comprend une bordure **16.** La bordure 16 s'étend entre une première extrémité **16a** solidaire de la tranche 15 de l'élément de coque 11a et une deuxième extrémité **16b** opposée. Plus particulièrement, la bordure 16 peut comprendre une succession de sommets **16c** et de creux **16d** définis par rapport à un plan médian qui est parallèle au fond marin FM.

En outre, la portion de liaison 14 peut comprendre une nervure **17.** La nervure 17 s'étend radialement par rapport à la bordure 16 entre une première extrémité **17a** solidaire de la bordure 16 et une deuxième extrémité **17b** libre. La nervure 17 entoure au moins partiellement la bordure 16. Plus particulièrement, la nervure17 entoure au moins partiellement la bordure 16 sensiblement proche de la deuxième extrémité 16b.

La nervure 17 peut comprendre plusieurs évidements **18,** par exemple six, régulièrement répartis sur ladite nervure 17. Les évidement 18 sont, par exemple, circulaire et présentent un troisième diamètre **D3.** Le troisième diamètre D3 est identique pour tous les évidements 18. Les évidements 18 peuvent être situés en regard des sommets 16c et des creux 16d de la bordure 16. Les évidements 18 situés en regard des sommets 16c peuvent présenter un troisième diamètre D3 supérieur au troisième diamètre D3 des évidements 18 situés en regard des creux 16d.

L'élément d'ancrage au fond marin FM comprend une pluralité de tiges filetées **19a.** Chaque tige filetée 19a est associée à un écrou **19b.** Chaque tige filetée 19a peut s'insérer dans un des évidements 18, de préférence dans un des évidements 18 situé en regard d'un des sommets 16c. L'écrou 19b, présentant un diamètre supérieur au troisième diamètre D3 de l'évidement 18, est retenu sur la nervure 17. La tige filetée 19a est ensuite vissée dans le fond marin FM préalablement percé, fixant l'habitat aquatique 1 audit fond marin FM. Les creux 16d de la portion de liaison 14 forment avec le fond marin FM des jours **31** adaptés pour permettre à la faune marine d'entrer dans le volume intérieur 13 et d'en sortir. La dimension caractéristique des jours 31 est déterminée en fonction des stades de vie et des espèces de la faune marine à qui est destiné l'habitat aquatique.

On pourra utiliser tout mode de fixation au fond marin adapté, par exemple par clipsage, montage en force, ... On pourra fixer de toute manière adaptée à un support dédié qui sera quant à lui fixé au fond marin.

L'élément de base 11 peut présenter une géométrie empilable. Des éléments de base 11 peuvent ainsi être emboîtés les uns sur les autres afin de faciliter leur stockage et leur déplacement avant leur installation. L'élément de coque 11a de chacun des éléments de base 11 peut présenter une géométrie de portion de sphère. L'élément de coque 11a présente, par exemple, une forme hémisphéroïdale.

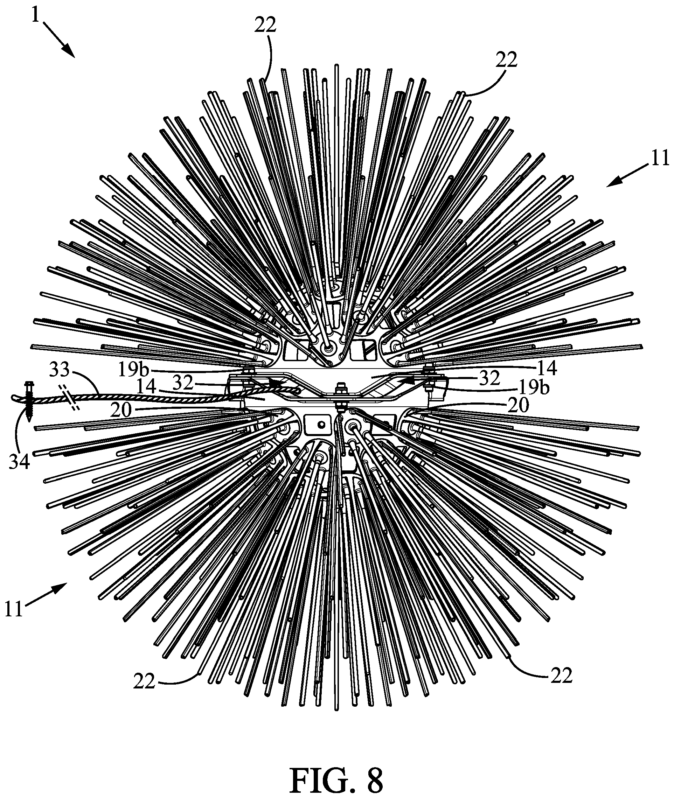

Alternativement, la base 10 peut être constituée d'une pluralité d'éléments de base 11 assemblés ensemble, par exemple de deux éléments de base 11 assemblés ensemble. Ce mode de réalisation est illustré sur la figure 8.

Dans un deuxième exemple de réalisation, représenté sur la figure 8, la coque 10a de la base 10 est sphéroïdale. Alternativement, mais non conformément à l'invention, la coque 10a peut être, ovale. L'habitat aquatique 1 est au moins partiellement immergé. La base 10 flotte entre deux eaux, portée par le courant marin, et l'élément d'ancrage relie ladite base 10 à une structure externe telle que le fond marin FM. Alternativement, la base 10 flotte et est maintenue au moins partiellement sous la surface de l'eau par l'élément d'ancrage. La coque 10a est creuse. Le volume intérieur 13 formé par la base 10 est sphéroïdale. La structure ainsi composée favorise des conditions de plus faible hydrodynamisme au sein du volume intérieur 13, favorisant ainsi la présence d'espèces de faune marine au stade juvénile.

Chaque élément de base 11 peut comprendre au moins une portion de liaison14 adaptée pour coopérer avec une portion de liaison14 d'un autre élément de base 11 afin d'assembler ensemble les deux éléments de base 11.

Deux portions de liaison 14 peuvent coopérer ensemble par emboîtement. Les portions de liaison 14 présentent, par exemple, des formes complémentaires. En outre, les portions de liaison 14 peuvent être hermaphrodites.

Plus particulièrement, la bordure 16 de chaque portion de liaison 14 comprend une succession de sommets 16c et de creux 16d. Chaque sommet 16c d'une portion de liaison14 d'un premier élément de base 11 peut s'engager dans un creux 16d d'une portion de liaison14 d'un deuxième élément de base 11. En outre, chaque creux 16d de ladite portion de liaison 14 du premier élément de base 11 peut recevoir un sommet 16c de ladite portion de liaison dudit deuxième élément de base 11.

L'emboîtement entre deux portions de liaison 14 est un emboîtement avec jeu. Des jours **32** peuvent apparaitre entre deux portions de liaison 14. Les jours 32 sont adaptés pour permettre à la faune marine d'entrer dans le volume intérieur 13 et d'en sortir.

Alternativement, l'emboîtement entre les portions de liaison 14 est un emboîtement sans jeu.

Les deux portions de liaison 14 peuvent être en outre maintenues ensemble par la pluralité de tiges filetées 19a. Chaque tige filetée 19a est associée à deux écrous 19b. Une tige filetée 19a peut s'insérer dans chacun des évidements 18 d'une des deux portions de liaison 14 et dans chacun des évidements 18 de l'autre des deux portions de liaison 14, les évidements 18 de l'une des deux portions de liaison 14 étant en regard des évidements 18 de l'autre des deux portions de liaison 14. Un premier écrou 19b, présentant un diamètre supérieur au troisième diamètre D3 des évidements 18, est retenu sur la nervure 17de l'une des deux portions de liaison 14. Un deuxième écrou 19b présentant un diamètre supérieur au troisième diamètre D3 des évidements 18, est retenu sur la nervure 17de l'autre des deux portions de liaison 14. D'autres modes de réalisation sont envisageables pour assembler ensemble deux éléments de base 11.

Chaque élément de base 11 est identique. Ainsi, les coûts de fabrication, de montage et d'installation de l'habitat aquatique 1 sont réduits.

L'élément d'ancrage peut comprendre une attache s'étendant dans le volume intérieur 13 défini entre deux éléments de base 11. L'attache peut présenter une forme lui interdisant de sortir du volume intérieur 13 défini entre deux éléments de base 11. L' attache est assemblée à un lien **33.** Le lien 33 est de faibles dimensions lui permettant de s'étendre entre le volume intérieur 13 et l'extérieur, par exemple à travers un jour 32. Une portion du lien présente un élément de solidarisation **34** pour la solidarisation à une structure externe. La structure externe peut être naturelle ou artificielle, telle qu'une paroi naturelle ou une surface d'attache d'un élément de construction (quai, ponton, chaine de mouillage, pile de pont, ...). Le système peut être assemblé en plaçant l'attache entre les deux éléments de base 11 dissociés, et en assemblant ensuite ceux-ci ensemble, emprisonnant ainsi l'attache dans le volume intérieur 13. En variante, on pourrait insérer en force l'attache à l'intérieur de la base 10 par déformation élastique. Le système est maintenu immergé par le lien d'une longueur adaptée et fixé à une structure externe située à un emplacement adapté.

Alternativement, l'attache pourrait être un flotteur. Le flotteur est dimensionné pour que l'ensemble flotteur et éléments de base 11 munis de leurs blocs faisceau 20 tende à flotter. En outre, le flotteur permet de compenser une augmentation de la densité des éléments de base 11 munis de leurs blocs faisceau 20, liée à un encrassement à moyen et long terme, pour que l'ensemble flotteur et éléments de base 11 munis de leurs blocs faisceau 20 tende toujours à flotter.

Alternativement, l'élément d'ancrage comprend un lien 33 qui s'étend entre un élément de solidarisation 34 et une attache extérieure à la base, et la base est assemblée, notamment fixée au lien. Les deux éléments de base 11 sont disposés de part et d'autre du lien et sont fixés ensemble en emprisonnant le lien 33. En variante, on pourrait fixer l'attache sur la face extérieure de la coque **10a.**

En variante encore, l'élément d'ancrage comprend un lest, une attache, et un lien 33 reliant ensemble le lest à l'attache. La base 10 est assemblée au lien 33 ou au lest. Pour assembler la base 10 au lien, on peut procéder comme ci-dessus. Pour assembler la base 10 au lest, on peut procéder comme ci-dessus lorsqu'on assemble la base 10 à l'attache. La structure externe est alors un lest.

En variante encore, l'élément d'ancrage comprend un filet, une attache, et un lien 33 reliant ensemble le filet à l'attache. La base 10 est assemblée au lien 33 ou à l'attache. Pour assembler la base 10 au lien, on peut procéder comme ci-dessus. Pour assembler la base 10 à l'attache, on peut procéder comme ci-dessus. La structure externe est alors le filet. Le filet est accroché au fond marin FM.

L'habitat aquatique 1 comprend suivant l'invention une pluralité de blocs faisceau 20, Plus particulièrement, chaque élément de coque 11a de chaque élément de base 11 de la base 10 comprend une pluralité de blocs faisceau 20. Chaque élément de base 11 comprend, par exemple, entre deux et trente blocs faisceau 20. La pluralité de blocs faisceau 20 est adaptée pour limiter l'approche des prédateurs de la coque 10a de l'habitat aquatique 1, protégeant ainsi la faune marine présente dans le volume intérieur 13 et ou entre les blocs faisceau 20.

La présence des blocs faisceau 20 permet en outre d'augmenter le nombre ou la taille des ouvertures traversantes 30 afin que le volume intérieur 13 soit balayée régulièrement par les courants marins, imitant ainsi parfaitement les abris naturels dans lesquelles la faune marine se cache. De plus, la présence des blocs faisceau 20 en-même permet d'imiter parfaitement les abris naturels dans lesquelles la faune marine se cache.

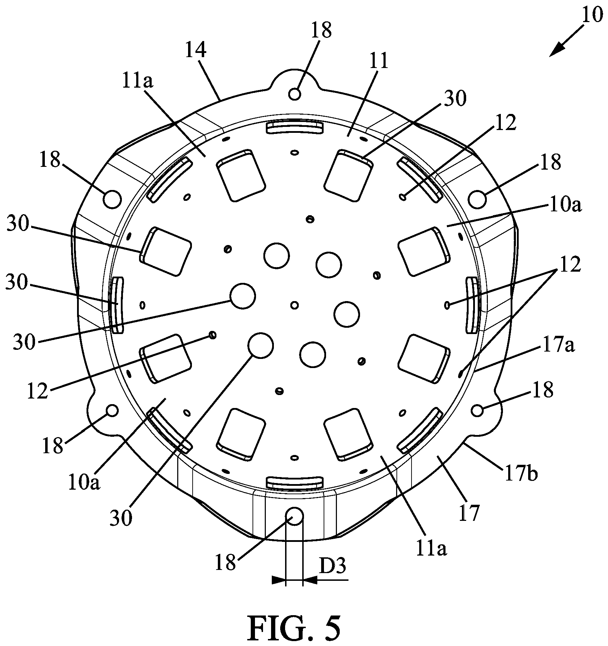

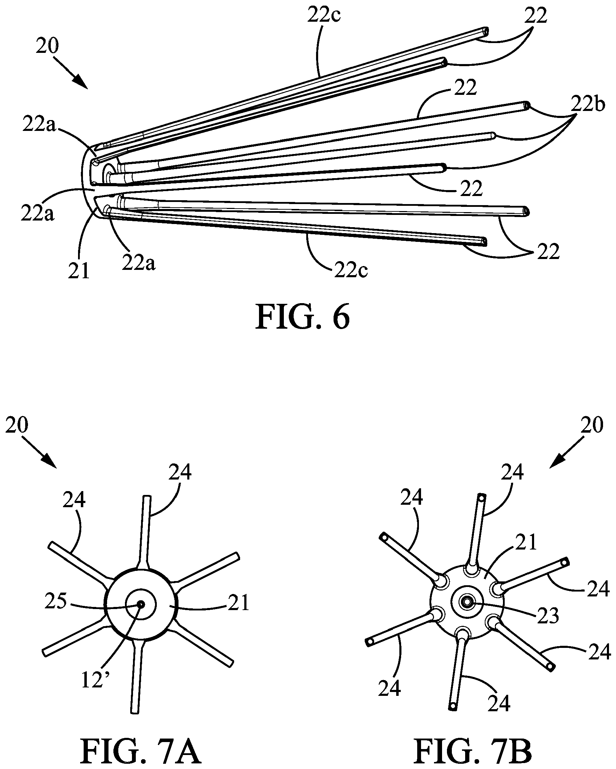

Comme illustré sur les figures 5, 6A et 6B, chaque bloc faisceau 20 est constitué comme suit :
Le bloc faisceau 20 comprend un pied **21** duquel s'étend au moins un jonc **22.** Plus particulièrement, le bloc faisceau 20 comprend une pluralité de joncs 22 s'étendant depuis le pied 21, par exemple entre deux et dix joncs 22. Un tel nombre de joncs 22 permet de limiter l'approche des prédateurs de l'habitat aquatique 1, protégeant ainsi la faune marine présente dans l'habitat aquatique 1, tout en maintenant assez d'espace pour que la faune marine à protéger puisse se déplacer dans l'habitat aquatique 1. Le pied 21 présente une forme, par exemple, sensiblement circulaire. Alternativement, le pied 21 peut présenter une forme ellipsoïde, ovoïde, polygonale, ou polygonale à bords arrondis.

Chacun des joncs 22 présente, par exemple, une forme de parallélépipède ou une forme sensiblement cylindrique. Le jonc 22 est allongé entre une tête **22a** et un pied **22b.** La tête 22a est, par exemple, solidaire du pied 21 et le pied 22b est, par exemple, libre. La tête 22a et le pied 22b présentent, par exemple, une section sensiblement circulaire. La distance entre la tête 22a et le pied 22b présente une longueur L. La longueur L est, par exemple, comprise entre 10 centimètres et 1 mètre. Le jonc 22 comprend en outre une surface périphérique 22c reliant la tête 22a au pied 22b. La surface périphérique 22c est sensiblement cylindrique. Par exemple, une section transversale de la surface périphérique est circulaire, ellipsoïde, ovoïde, polygonale, ou polygonale à bords arrondis.

La pluralité de joncs 22 d'un même bloc faisceau forme une enveloppe géométrique conique s'élargissant. L'enveloppe géométrique conique présente une conicité pouvant être inférieur à 20%. La conicité est le quotient de la différence des diamètres du cône par la longueur. Les blocs faisceau 20 de faible conicité peuvent être facilement agencés côte à côte, et ou tête-bêche pour leur stockage et leur transport, sans perte de place.

Le jonc 22 est assez souple afin d'accompagner naturellement le mouvement de l'eau, permettant d'augmenter l'attractivité de l'habitat aquatique 1 pour la faune marine, tout en restant suffisamment rigide pour conserver sensiblement son orientation propre à repousser les prédateurs, et à garantir l'interdiction d'accès pour les objets de trop gros volume. Le jonc 22 est adapté pour résister à la corrosion liée à la salinité importante de l'eau de mer. Le jonc 22 est réalisé, par exemple, en matière plastique tel que le polypropylène, les plastiques biosourcés, et plus généralement toute matière moulable, inerte et résistante dans l'eau de mer. L'extrémité libre du jonc peut être arrondie pour supprimer les risques de blessure en cas de contact avec l'Homme (mise en œuvre, baignade, plongée, etc.).

La pluralité de joncs 22 comprend, par exemple, un jonc central **23** et une pluralité de joncs périphériques **24.** Le jonc central 23 s'étend perpendiculaire au plan contenant le pied 21. Le jonc central peut être plein. Le jonc central 23 comprend un trou **25.** Le trou 25 peut être taraudé. Le trou 25 est non débouchant. Le trou 25 s'étend au travers dudit pied 21 et dans ledit jonc central 23. Chacun des joncs périphériques 24 s'étend transversalement au plan contenant le pied 21. Plus particulièrement, le pied 21 et la pluralité de joncs périphériques 24 forme une surface conique de l'enveloppe géométrique conique s'élargissant.

Chacun des joncs périphériques 24 peut être plein ou creux. Chacun des joncs périphériques 24 présente la même longueur L. Alternativement, au moins un jonc périphérique 24 de la pluralité de joncs périphériques 24 présente une longueur L2 supérieure, ou inférieure, à la longueur L des autres joncs périphériques 24. En outre, la surface périphérique 22c d'au moins un jonc périphérique 24 de la pluralité de joncs périphériques 24 peut être semi-cylindrique.

En outre, la portion d'assemblage 12' du bloc faisceau 20 comprend une vis 26 et le trou 25 du jonc central 23. Le bloc faisceau 20 est assemblé à la base 10 de l'habitat aquatique 1 par l'intermédiaire de ladite vis 26. Plus particulièrement, le bloc faisceau 20 est assemblé à l'élément de coque 11a d'un élément de base 11 de la base 10 de l'habitat aquatique 1 par l'intermédiaire de ladite vis 26. Le bloc faisceau 20 est, par exemple, assemblé de façon amovible.

La vis 26 présente une tête plate associée un corps fileté. Le corps fileté de la vis 26 s'insère dans l'évidement formant la portion d'assemblage 12 d'un élément de base 11. La tête plate de la vis 26, présentant un diamètre supérieur au deuxième diamètre D2 de l'évidement formant la portion d'assemblage 12 d'un élément de base 11, est retenue sur ledit élément de base 11. Le corps fileté de la vis 26 est ensuite engagé dans le trou 25 du jonc central 23, assemblant le bloc faisceau 20 audit élément de base 11.

La vis 26 est, par exemple, une vis auto-taraudeuse, permettant ainsi de ne pas préalablement tarauder le trou 25. La vis 26 peut être une vis à bout plat. En outre, la vis 26 peut subir tout traitement approprié afin d'en renforcer la résistance à la salinité marine.

D'autres modes de réalisation sont envisageables pour l'assemblage du bloc faisceau 20 à la coque 10a, et notamment le clipsage, le collage, la soudure ultra son, etc..

Chaque bloc faisceau 20 de la pluralité de blocs faisceau 20 est identique. Ainsi, les coûts de fabrication, de montage et d'installation de l'habitat aquatique 1 sont réduits. Alternativement, une partie des blocs faisceau 20 de la pluralité de blocs faisceau 20 peut présenter des différences tel que, par exemple, un nombre de joncs 22 différent ou une longueur L de joncs 22 différente afin de répondre à des exigences spécifiques liées, par exemple, au terrain ou à la faune marine locale.

En configuration assemblée, l'habitat aquatique 1 comprend donc une base 11 et une pluralité de blocs faisceau 20 s'étendant depuis la base 11. La base 11 et les blocs faisceau 20sont disposés de manière à ce qu'un objet de dimension transversale supérieure à un diamètre caractéristique **De** ne puisse atteindre le volume intérieur 13. Le diamètre caractéristique est par exemple de 2 centimètres, voire aller juqu'à 10 centimètres. Notamment, les joncs 22 d'un même bloc faisceau 20 peuvent présenter, à une certaine distance du pied 21 (par exemple à la distance correspondant à la longueur du plus court des joncs 22), une configuration intersectant tout disque transversal de diamètre supérieur au diamètre caractéristique Dc. Les blocs faisceaux 20 sont disposés les uns par rapport aux autres de manière à présenter, à une certaine distance du pied 21 (par exemple à la distance correspondant à la longueur du plus long des joncs 22), une configuration intersectant tout disque transversal de diamètre supérieur au diamètre caractéristique Dc. A contrario, la faible conicité des blocs faisceaux doit permettre à un objet au diamètre caractéristique Dc de sortir de l'habitat aquatique artificiel, quitte à déformer élastiquement légèrement les joncs 22 provisoirement.

Un tel habitat aquatique 1 selon l'invention peut être disposé isolément ou en groupe. Lorsque les habitats aquatiques 1 sont disposés en groupe, une partie desdits habitats aquatiques 1 est identique. Alternativement, l'ensemble des habitats aquatiques 1 du groupe sont identiques.

En outre, les habitats aquatiques 1 du groupe d'habitats aquatiques 1 peuvent être disposés les uns par rapport aux autres de façon ordonnée afin d'augmenter l'attractivité générale du groupe d'habitats aquatiques 1. Par exemple, les habitats aquatiques 1 peuvent être alignés de façon à créer plusieurs barrières successives, ou encore répartis de façon à créer une succession de cercles concentriques.

Le cas échéant, l'habitat aquatique 1 est configuré en kit, comprenant un ou plusieurs éléments de base 11 et une pluralité de bloc faisceaux à assembler.

Lors de l'installation de l'habitat aquatique 1 dans un secteur marin, un camion (non représenté) amène la pluralité d'éléments de base 11 et la pluralité de blocs faisceau 20 au bord de la zone choisie. On commence par assembler la pluralité de blocs faisceau 20 aux éléments de base 11 puis on assemble entre eux les éléments de base 11. Alternativement, on commence par assembler entre eux les éléments de base 11 puis par assembler la pluralité de blocs faisceaux auxdits éléments de base 11. L'habitat aquatique 1 est ensuite relié au fond marin FM par l'élément d'ancrage. L'opération peut être reproduite sur chacun des habitats aquatiques 1 du groupe d'habitats aquatiques 1.

De préférence, les fixations décrites ci-dessus sont réversibles. Ceci permet par exemple de remplacer les blocs faisceaux 20 en cours d'opération de maintenance.

Les exemples de réalisation décrits ci-dessus sont des illustrations de la présente invention. Diverses modifications peuvent leur être apportées sans sortir du cadre de l'invention qui ressort des revendications annexées.

## Revendications

1. Habitat aquatique artificiel comprenant :
- une base (10) formée d'au moins un élément de base (11), ledit au moins un élément de base comprenant au moins une portion d'assemblage (12),
- une pluralité de blocs faisceau (20), chaque bloc faisceau comprenant un pied (21) duquel s'étendent une pluralité de joncs (22), les joncs s'étendant du pied à l'intérieur d'une enveloppe géométrique conique s'élargissant, chaque bloc faisceau comprenant en outre une portion d'assemblage (12') adaptée pour coopérer avec une portion d'assemblage (12) de la base (10) pour assembler ensemble un bloc faisceau à un élément de base,
- un élément d'ancrage adapté pour relier la base à une structure externe,
**caractérisé en ce que** la base (10) comprend en outre une coque (10a) creuse, et **en ce que** chacun des au moins un élément de base (11) comprend un élément de coque (11a) présentant une géométrie de portion de sphère.

2. Habitat aquatique artificiel selon la revendication 1, dans lequel la base (10) est formée d'une pluralité d'éléments de base (11) assemblés ensemble, chaque élément de base comprenant en outre au moins une portion de liaison(14) adaptée pour coopérer avec une portion de liaison d'un autre élément de base pour assembler ensemble plusieurs éléments de base, et optionnellement dans lequel les éléments de base (11) présentent des géométries empilables.

3. Habitat aquatique artificiel selon la revendication 2, dans lequel la portion de liaison (14) de chaque élément de base (11) est disposée sur une tranche de l'élément de coque (11a), et/ou dans lequel la portion de liaison (14) est hermaphrodite.

4. Habitat aquatique artificiel selon l'une des revendications 2 à 3, dans lequel au moins deux, et notamment tous les éléments de base (11) sont identiques.

5. Habitat aquatique artificiel selon l'une des revendications 2 à 4, dans lequel les portions de liaison (14) coopèrent ensemble par emboîtement par complémentarité de forme, et/ou dans lequel les portions de liaison (14) coopèrent ensemble de manière amovible, notamment par boulonnage.

6. Habitat aquatique artificiel selon l'une des revendications 1 à 5, dans lequel chacun des au moins un élément de base (11) présente au moins une ouverture traversante (30), et/ou dans lequel chacun des au moins un élément de base (11) comprend un évidement constituant la portion d'assemblage (12) de l'élément de base, les portions d'assemblage (12, 12') coopérant ensemble de manière amovible, notamment par vissage.

7. Habitat aquatique artificiel selon l'une des revendications 1 à 6, dans lequel les enveloppes géométriques coniques des blocs faisceau (20) ne s'intersectent pas, et/ou dans lequel chaque enveloppe géométrique conique présente un angle de conicité inférieur à 20°.

8. Habitat aquatique artificiel selon l'une des revendications 1 à 7, dans lequel chaque bloc faisceau (20) comprend entre 2 et 10 joncs (22), et/ou dans lequel chaque élément de base (11) est assemblé à entre 2 et 30 blocs faisceau (20).

9. Habitat aquatique artificiel selon l'une des revendications 1 à 8, dans lequel la base (10) est constituée de deux éléments de base (11).

10. Habitat aquatique artificiel selon l'une des revendications 1 à 9, dans lequel deux blocs faisceaux (20), notamment deux blocs faisceau assemblés à un même élément de base (11), notamment tous les blocs faisceau assemblés à un même élément de base, et notamment tous les blocs faisceaux sont identiques.

11. Habitat aquatique artificiel en kit comprenant séparément les éléments nécessaires à la réalisation d'un habitat aquatique(1) artificiel selon l'une quelconque des revendications 1 à 10.

12. Système d'habitats aquatiques comprenant une pluralité d'habitats aquatiques(1) artificiels chacun selon l'une quelconque des revendications 1 à 10, agencés de manière ordonnée, et optionnellement comprenant au moins deux, et notamment tous les habitats aquatiques (1) artificiels identiques.

13. Procédé de fabrication d'un habitat aquatique (1) artificiel comprenant :
- on fournit une base (10) formée d'au moins un élément de base (11), ledit au moins un élément de base comprenant au moins une portion d'assemblage (12), ladite base (10) comprenant en outre une coque (10a) creuse, chacun des au moins un élément de base (11) comprenant un élément de coque (11a) présentant une géométrie de portion de sphère,
- on fournit une pluralité de blocs faisceau (20), chaque bloc faisceau comprenant un pied (21) duquel s'étendent une pluralité de joncs (22), les joncs s'étendant du pied à l'intérieur d'une enveloppe géométrique conique s'élargissant, chaque bloc faisceau comprenant en outre une portion d'assemblage (12') adaptée pour coopérer avec une portion d'assemblage (12) de la base (10) pour assembler ensemble un bloc faisceau à un élément de base,
- on assemble les blocs faisceau à l'au moins un élément de base,
- on relie la base à une structure externe par un élément d'ancrage.

14. Procédé de fabrication selon la revendication 13, dans lequel :
- on assemble ensemble une pluralité d'éléments de base (11) pour former la base (10), chaque élément de base comprenant en outre au moins une portion de liaison (14) adaptée pour coopérer avec une portion de liaison (14) d'un autre élément de base pour assembler ensemble plusieurs éléments de base,
et optionnellement dans lequel on assemble les blocs faisceau (20) aux éléments de base (11) avant d'assembler ensemble des, et notamment les, éléments de base,
ou optionnellement dans lequel on assemble les blocs faisceau (20) aux éléments de base (11) après avoir assemblé ensemble des, et notamment les, éléments de base.

15. Procédé de fabrication d'un système d'habitats aquatiques (1) dans lequel on forme une pluralité d'habitats aquatiques en mettant en oeuvre à chaque fois le procédé de fabrication d'un habitat aquatique artificiel selon l'une des revendications 13 à 14, et en disposant dans l'eau les habitats aquatiques ainsi formés de manière ordonnée.

## Patentansprüche

1. Künstlicher aquatischer Lebensraum, umfassend:
- eine Basis (10), die aus mindestens einem Basiselement (11) gebildet ist, wobei das mindestens eine Basiselement mindestens einen Montageabschnitt (12) umfasst,
- eine Mehrzahl an Strahlenblöcke (20), wobei jeder Strahlenblock einen Fuß (21) umfasst, von dem sich eine Mehrzahl an Stangen (22) erstrecken, wobei sich die Stangen vom Fuß innerhalb einer sich erweiternden konischen geometrischen Hülle erstrecken, wobei jeder Strahlenblock ferner einen Montageabschnitt (12') umfasst, der dazu ausgelegt ist, mit einem Montageabschnitt (12) der Basis (10) zusammenzuwirken, um einen Strahlenblock mit einem Basiselement zusammenzusetzen,
- ein Verankerungselement, das dazu ausgelegt ist die Basis mit einer äußeren Struktur zu verbinden,
**dadurch gekennzeichnet, dass** die Basis (10) ferner eine Hohlschale (10a) umfasst und dadurch, dass jedes des mindesten einen Basiselements (11) ein Schalenelement (11a) umfasst, das eine Kugelabschnittsgeometrie aufweist.

2. Künstlicher aquatischer Lebensraum nach Anspruch 1, wobei die Basis (10) aus einer Mehrzahl zusammengesetzter Basiselemente (11) gebildet ist, wobei jedes Basiselement ferner mindestens einen Verbindungsabschnitt (14) umfasst, der dazu ausgelegt ist mit einem Verbindungsabschnitt eines anderen Basiselements zusammenzuwirken, um mehrere Basiselemente zusammenzusetzen,
und gegebenenfalls wobei die Basiselemente (11) stapelbare Geometrien aufweisen.

3. Künstlicher aquatischer Lebensraum nach Anspruch 2, wobei der Verbindungsabschnitt (14) jedes Basiselements (11) an einem Rand des Schalenelements (11 a) angeordnet ist und/oder wobei der Verbindungsabschnitt (14) hermaphroditisch ist.

4. Künstlicher aquatischer Lebensraum nach einem der Ansprüche 2 bis 3, wobei mindestens zwei und insbesondere alle Basiselemente (11) identisch sind.

5. Künstlicher aquatischer Lebensraum nach einem der Ansprüche 2 bis 4, wobei die Verbindungsabschnitte (14) durch Verfalzung durch Formkomplementarität zusammenwirken und/oder
wobei die Verbindungsabschnitte (14) auf lösbare Weise zusammenwirken, insbesondere durch Bolzenverbindung.

6. Künstlicher aquatischer Lebensraum nach einem der Ansprüche 1 bis 5, wobei jedes des mindestens einen Basiselements (11) mindestens eine Durchgangsöffnung (30) aufweist und/oder
wobei jedes des mindestens einen Basiselements (11) eine Aussparung umfasst, die den Montageabschnitt (12) des Basiselements bildet, wobei die Montageabschnitte (12, 12') auf lösbare Weise zusammenwirken, insbesondere durch Verschraubung.

7. Künstlicher aquatischer Lebensraum nach einem der Ansprüche 1 bis 6, wobei sich die konischen geometrischen Hüllen der Strahlblöcke (20) nicht schneiden und/oder
wobei jede konische geometrische Hülle einen Konizitätswinkel von weniger als 20° aufweist.

8. Künstlicher aquatischer Lebensraum nach einem der Ansprüche 1 bis 7, wobei jeder Strahlenblock (20) zwischen 2 und 10 Stangen (22) umfasst und/oder
wobei jedes Basiselement (11) mit zwischen 2 und 30 Strahlenblöcken (20) zusammengesetzt ist.

9. Künstlicher aquatischer Lebensraum nach einem der Ansprüche 1 bis 8, wobei die Basis (10) aus zwei Basiselementen (11) besteht.

10. Künstlicher aquatischer Lebensraum nach einem der Ansprüche 1 bis 9, wobei zwei Strahlenblöcke (20), insbesondere zwei Strahlenblöcke, die mit demselben Basiselement (11) zusammengesetzt sind, insbesondere alle Strahlenblöcke, die mit demselben Basiselement zusammengesetzt sind und insbesondere alle Strahlblöcke identisch sind.

11. Künstlicher aquatischer Lebensraum im Kit, separat umfassend die zur Verwirklichung eines künstlichen aquatischen Lebensraums (1) gemäß einem der Ansprüche 1 bis 10 erforderlichen Elemente.

12. System von aquatischen Lebensräumen, umfassend eine Mehrzahl künstlicher aquatischer Lebensräume (1), jeweils gemäß einem der Ansprüche 1 bis 10, die in geordneter Weise angeordnet sind und
gegebenenfalls umfassend mindestens zwei und insbesondere alle identischen künstlichen aquatischen Lebensräume (1).

13. Verfahren zur Herstellung eines künstlichen aquatischen Lebensraums (1), umfassend:
- Bereitstellen einer Basis (10), die aus mindestens einem Basiselement (11) gebildet ist, wobei das mindestens eine Basiselement mindestens einen Montageabschnitt (12) umfasst, wobei die Basis (10) ferner eine Hohlschale (10a) umfasst, wobei jedes des mindestens einen Basiselements (11) ein Schalenelement (11a) umfasst, das eine Kugelabschnittsgeometrie aufweist,
- Bereitstellen einer Mehrzahl an Strahlenblöcke (20), wobei jeder Strahlenblock einen Fuß (21) umfasst, von dem sich eine Mehrzahl an Stangen (22) erstrecken, wobei sich die Stangen vom Fuß innerhalb einer sich erweiternden konischen geometrischen Hülle erstrecken, wobei jeder Strahlenblock ferner einen Montageabschnitt (12') umfasst, der dazu ausgelegt ist, mit einem Montageabschnitt (12) der Basis (10) zusammenzuwirken, um einen Strahlenblock mit einem Basiselement zusammenzusetzen,
- Zusammensetzen der Strahlenblöcke mit dem mindestens einen Basiselement,
- Verbinden der Basis mit einer äußeren Struktur mittels eine Verankerungselements.

14. Verfahren zur Herstellung nach Anspruch 13, wobei:
- eine Mehrzahl an Basiselemente (11) zusammengesetzt werden, um die Basis (10) zu bilden, wobei jedes Basiselement ferner mindestens einen Verbindungsabschnitt (14) umfasst, der dazu ausgelegt ist mit einem Verbindungsabschnitt (14) eines anderen Basiselements zusammenzuwirken, um mehrere Basiselemente zusammenzusetzen und gegebenenfalls wobei die Strahlenblöcke (20) mit den Basiselementen (11) zusammengesetzt werden vor einem Zusammensetzen von, und insbesondere von den, Basiselementen, oder
gegebenenfalls wobei die Strahlenblöcke (20) mit den Basiselementen (11) zusammengesetzt werden nachdem Basiselemente, insbesondere die Basiselemente, zusammengesetzt worden sind.

15. Verfahren zur Herstellung eines Systems von aquatischen Lebensräumen (1), wobei eine Mehrzahl aquatischer Lebensräume gebildet werden, indem jedes Mal das Verfahren zur Herstellung eines künstlichen aquatischen Lebensraums gemäß einem der Ansprüche 13 bis 14 durchgeführt wird und wobei die so gebildeten aquatischen Lebensräume in geordneter Weise im Wasser angeordnet werden.

## Claims

1. Artificial aquatic habitat comprising:
- a base (10) formed by at least one base element (11), said at least one base element comprising at least one joining portion (12),
- a plurality of cluster blocks (20), each cluster block comprising a foot (21) from which extend a plurality of rods (22), the rods extending from the foot inside a widening, geometrically conical envelope, each cluster block further comprising a joining portion (12') suitable for cooperating with a joining portion (12) of the base (10) to join together a cluster block and a base element,
- an anchoring element suitable for linking the base to an external structure,
**characterized in that** the base (10) further comprises a hollow shell (10a), and **in that** each of the at least one base element (11) comprises a shell element (11a) having a spherical portion geometry.

2. Artificial aquatic habitat according to Claim 1, wherein the base (10) is formed by a plurality of base elements (11) joined together, each base element further comprising at least one link portion (14) suitable for cooperating with a link portion of another base element to join together several base elements,
and, optionally, wherein the base elements (11) have stackable geometries.

3. Artificial aquatic habitat according to Claim 2, wherein the link portion (14) of each base element (11) is disposed on an edge of the shell element (11a),
and/or wherein the link portion (14) is hermaphroditic.

4. Artificial aquatic habitat according to one of Claims 2 and 3, wherein at least two, and notably all the base elements (11) are identical.

5. Artificial aquatic habitat according to one of Claims 2 to 4, wherein the link portions (14) cooperate together by fitting through complementarity of form,
and/or wherein the link portions (14) cooperate together removably, notably by bolting.

6. Artificial aquatic habitat according to one of Claims 1 to 5, wherein each of the at least one base element (11) has at least one through opening (30),
and/or wherein each of the at least one base element (11) comprises a recess forming the joining portion (12) of the base element, the joining portions (12, 12') cooperating together removably, notably by screwing.

7. Artificial aquatic habitat according to one of Claims 1 to 6, wherein the conical geometrical envelopes of the cluster blocks (20) do not intersect,
and/or wherein each conical geometrical envelope has a taper angle less than 20°.

8. Artificial aquatic habitat according to one of Claims 1 to 7, wherein each cluster block (20) comprises between 2 and 10 rods (22),
and/or wherein each base element (11) is joined to between 2 and 30 cluster blocks (20).

9. Artificial aquatic habitat according to one of Claims 1 to 8, wherein the base (10) is composed of two base elements (11).

10. Artificial aquatic habitat according to one of Claims 1 to 9, wherein two cluster blocks (20), notably two cluster blocks joined to one and the same base element (11), notably all the cluster blocks joined to one and the same base element, and notably all the cluster blocks are identical.

11. Artificial aquatic habitat in kit form separately comprising the elements necessary to the production of an artificial aquatic habitat (1) according to any one of Claims 1 to 10.

12. Aquatic habitat system comprising a plurality of artificial aquatic habitats (1) each according to any one of Claims 1 to 10, arranged in ordered fashion,
and optionally having at least two, and notably all the artificial aquatic habitats (1) identical.

13. Method for producing an artificial aquatic habitat (1) wherein:
- a base (10) is supplied that is formed by at least one base element (11), said at least one base element comprising at least one joining portion (12), said base (10) further comprising a hollow shell (10a), each of the at least one base element (11) comprising a shell element (11a) having a spherical portion geometry,
- a plurality of cluster blocks (20) are supplied, each cluster block comprising a foot (21) from which extend a plurality of rods (22), the rods extending from the foot within a widening conical geometrical envelope, each cluster block further comprising a joining portion (12') suitable for cooperating with a joining portion (12) of the base (10) to join together a cluster block with a base element,
- the cluster blocks are joined to the at least one base element,
- the base is linked to an external structure by an anchoring element.

14. Production method according to Claim 13, wherein:
- a plurality of base elements (11) are joined together to form the base (10), each case element further comprising at least one link portion (14) suitable for cooperating with a link portion (14) of another base element to join together several base elements,
and, optionally, wherein the cluster blocks (20) are joined to the base elements (11) before joining together multiple base elements, and notably all the base elements,
or, optionally, wherein the cluster blocks (20) are joined to the base elements (11) after having joined together base elements, and notably all the base elements.

15. Method for producing an aquatic habitat system (1) wherein a plurality of aquatic habitats are formed by, each time, applying the method for producing an artificial aquatic habitat according to one of Claims 13 and 14, and by arranging the duly formed aquatic habitats in water in ordered fashion.
